# EUROPEAN PATENT SPECIFICATION

(11) **EP 4 303 610 B1**
(45) Date of publication and mention of the grant of the patent: **02.12.2026**
(21) Application number: 22183282.7
(22) Date of filing: 06.07.2022
(51) Int. Cl.: G01S 7/02, G01S 7/03, G01S 13/931, G01S 13/87, G01S 13/42, H01Q 1/32, H01Q 21/00, H01Q 21/24, H01Q 21/30

(54) **RADAR SYSTEM FOR AUTOMOTIVE APPLICATIONS**
RADARSYSTEM FÜR KRAFTFAHRZEUGANWENDUNGEN
SYSTÈME RADAR POUR DES APPLICATIONS AUTOMOBILES

(43) Date of publication of application: 10.01.2024
(73) Proprietor: Aptiv Technologies AG, 8200 Schaffhausen (CH)
(72) Inventor: VOLLBRACHT, Dennis, 40721 Hilden (DE); KAZIMI, Sadam Hussain, 42115 Wuppertal (DE); VARMA, Sachit, 40883 Ratingen (DE)
(74) Representative: Bardehle Pagenberg Partnerschaft mbB Patentanwälte Rechtsanwälte

(56) References cited:
- EP-A1- 2 653 882
- DE-A1- 102015 003 115
- US-A1- 2019 271 765

## Description

### 1. Technical field

The present invention generally relates to a radar system for automotive applications capable of detecting and locating objects as well as street condition monitoring.

### 2. Technical background

Modern cars often comprise electromagnetic sensors that are for example part of advanced driver-assistance systems (ADAS) such as adaptive cruise control, lane change assistance, intersection assistance to name just a few examples. An example of such an electromagnetic sensor is a radar (radio detection and ranging) sensor which is used for detecting and locating objects such as cars, pedestrians, obstacles, etc. The radar sensor emits an electromagnetic signal, usually as a directed beam, with a specific frequency such as for example 77 GHz. The signal is reflected off an object and the reflected signal (sometimes called "echo") is received and detected by the radar sensor and further processed to cause corresponding actions.

Especially in the context of autonomous driving, detailed information about the surroundings of an autonomous vehicle is very important such as the condition of the street on which the vehicle is travelling. This includes both the surface material of the street such as asphalt, concrete, sand, etc. and possible precipitation such as rain, snow, ice etc. Special radar systems can be used for such street condition monitoring (SCM) applications. For example, European patent application No. 21197464.7 of the same applicant discloses a method and a radar system for determining the condition of a road e.g. in the environment of a vehicle. The method requires a special radar system which may be installed at the vehicle and which comprises radar transmitter and receiving units configured to transmit and to receive, respectively, radar waves having at least two different polarizations.

EP 2 653 882 A1 is directed to a method for road condition recognition and mentions that commercially available radars are either for blind spot detection (BSD) or for automatic cruise control (ACC). The document studies the capabilities of a 24 GHz forward looking mono-static (transmitter and receiver are in the same location) radar as a detector of low friction spots on asphalt and mentions that a road condition recognition radar needs to be able to measure backscattering for different polarizations. Commercial automotive radars could be modified by adding a dual polarized antenna with a switch in the transmitter or receiver side or both. In addition, if using multipurpose radar, a switchable antenna is required such that the radar beam can be switched between the road surface and the direction of motion of the vehicle.

US 2019/271765 A1 relates to a polarimetric radar system for classifying objects ahead of a vehicle including a radar transmitter unit for transmitting radar waves of at least two different polarizations and a radar receiving unit for receiving radar waves of at least two different polarizations.

DE 10 2015 003115 A1 relates to a method for determining road condition information for a road ahead of and on which a motor vehicle is driving, wherein the motor vehicle has at least one radar sensor designed in semiconductor technology and directed towards the area in front of the motor vehicle. The antenna arrangement of the radar sensor has transmitting antennas for horizontally and vertically linearly polarized radar radiation as well as corresponding receiving antennas for horizontally and vertically linearly polarized, reflected radar radiation.

It is the object of the present invention to provide a radar system for automotive applications that is capable of detecting and locating objects and at the same time to allow for street condition monitoring.

### 3. Summary of the Invention

The above object is met by a radar system according to claim 1.

The proposed radar system is configured to be installed at a vehicle and comprises a processing device having a plurality of transmit outputs and a plurality of receive inputs; at least one main transmit antenna being configured to transmit main radar waves essentially parallel to a road on which the vehicle is standing or driving, and being communicatively coupled to the processing device via a first transmit output; at least one main receive antenna being configured to receive reflections of the main radar waves off objects on the road, and being communicatively coupled to the processing device via a first receive input; a first street condition monitoring, SCM, transmit antenna being configured to transmit first polarized radar waves essentially directed to the road at a first polarization, and being communicatively coupled to the processing device via a second transmit output; a second SCM transmit antenna being configured to transmit second polarized radar waves essentially directed to the road at a second polarization different from the first polarization, and being communicatively coupled to the processing device via a third transmit output; and a first SCM receive antenna being configured to receive, at the first polarization, reflections of the polarized radar waves off the road, and being communicatively coupled to the processing device via a second receive input; and a second SCM receive antenna being configured to receive, at the second polarization, reflections of the polarized radar waves off the road, and being communicatively coupled to the processing device via a third receive input.

The main antennas are used for object detection and location and radiate and receive essentially parallel to the road. Essentially parallel in the context of the present invention means that the longitudinal axis of the main lobe of the antenna's gain pattern is more or less parallel to the street (assuming a flat road), e.g. within ±5°. The SCM antennas are used for street condition monitoring and are essentially directed to the road which means that the longitudinal axes of the main lobes of their gain patterns are tilted and point to the road. The SCM antennas are polarimetric antennas meaning that they are configured to emit and receive at a certain polarization. Examples of such polarization include horizontal and vertical linear polarization as well as left-handed and right-handed circular polarization. The SCM antennas comprise at least one pair of a transmit and a receive antenna having a first polarization and another pair of transmit and a receive antenna having a second polarization different from the first polarization. This allows for street condition monitoring, i.e. determining street surface and precipitation, by measuring the co-polarized and cross-polarized backscattering coefficients as described in European patent application No. 21197464.7.

The main and SCM antennas are operatively coupled to a corresponding processing device. The processing device may comprise a number of transmit output and of receive inputs. The transmit antennas may be communicatively coupled to the transmit outputs and the receive antennas may be communicatively coupled to the receive inputs. The processing device allows to drive the transmit antennas and to receive from the receive antennas. Using certain modulation schemes, it is possible to have the main antennas scan at different azimuth angles in order to detect and locate objects above road levels. Simultaneously or intermittently, the SCM antennas may be operated in order to perform street condition monitoring measurements. Thus, the processing device allows to operate the antennas in order to obtain the most accurate and useful information about the surroundings of the vehicle.

According to the invention, the antennas are coupled to the processing device via dedicated channels. Thus, the first transmit output is different from the second transmit output and the second transmit output is different from the third transmit output. The first receive input is different from the second transmit input and the second transmit input is different from the third transmit input. Dedicated channels have the advantage that the main antennas can be operated simultaneously with the SCM antennas for example at the same center frequency with different phase codes to distinguish between radar signals from different antenna types. Also the main antennas are completely isolated from the SCM antennas and there is no crosstalk/interference between both types of antennas. Having separate dedicated channels of the MMIC for SCM antennas, these can be designed very wideband to provide an operational bandwidth of for example 5 GHz from 76 to 81 GHz. The wide bandwidth of the SCM antennas give the freedom of selecting the center frequency between 76 to 81 GHz.

Alternatively, the processing device may operate the antennas alternately, i.e. one antenna type at a time. For example, the main antennas may operate at a different frequency than the SCM antennas.

The proposed coupling of the antennas to the processing device via dedicated inputs and output also has the advantage that existing radar system designs can be reused simply by replacing some of the main antennas by SCM antennas. Thus, there is no requirement for a complete redesign.

Thus, the present invention provides an integrated radar system for automotive applications that is at the same time capable of object detection and location as well as street condition monitoring. This meets the requirements of autonomous driving applications which require reliable and detailed information about the vehicular surroundings. Importantly, by providing just a single radar system the integration into the vehicle is simplified and costs are significantly reduced as additional radar systems would require additional space, a separate interface to the vehicle's control systems and additional end of line testing at the original equipment manufacturer (OEM).

The main lobes of the beam patterns of the SCM transmit and receive antennas may be tilted relative to the main lobes of the beam patterns of the main transmit and receive antennas. As mentioned, this allows the SCM antennas to perform street condition monitoring by transmitting polarized radar beams onto the street and by measuring its backscattering coefficients at at least two different polarizations. At the same time, the main antennas are able to detect and locate any objects above the road level such as pedestrians, vehicles or road boundaries.

The SCM antennas may be configured to cover an elevation angle of -75° to 0°, preferably of -40° to -5°, more preferably of -12° to -8° and most preferably of -10° when the radar system is installed at a vehicle. An angle of between -90° and 0° allows the SCM antennas to measure the condition of the road, whereas the main antennas perform object detection and location. An angle of -12° to -8°, in particular of about -10° advantageously illuminates the road at a range of about 3m to the radar system when mounted at a typical height of 0.5 m from the ground. This range is close enough to the vehicle in order to provide information about the immediately surrounding section of the road. On the other hand, it leads to a sufficiently pointed incidence angle relative to the road.

The SCM receive antennas may have a higher dynamic range than the at least one main receive antenna. The high dynamic range allows the detection of all kinds of street conditions. As the amplitudes of radar waves backscattered off the street are rather low due to the flat incidence angle as compared to reflections off objects such as cars, the high dynamic range of the SCM antennas allows a reliable classification of the street condition even under such circumstances. Generally, the usage of an antenna having a high dynamic range allows detection of weak signals with a reasonable signal-to-noise ratio.

The SCM antennas may have a bandwidth of at least 2 GHz, preferably at least 3 GHz, more preferably at least 4 GHz and most preferably at least 5 GHz. For example, the SCM antennas may be wideband antennas with and operational bandwidth of 5 GHz from 76 to 81 GHz. As the antenna is wideband, the radiation frequency can either be controlled by the input chirp or by fine tuning the antenna operational bandwidth. This is very important for the limited bandwidth restrictions of the ITU in certain countries. In addition, a wide band antenna may be operated at different center frequencies which allows adapting the operational frequency to different requirements.

A high bandwidth of the SCM antennas also allows using different frequencies or frequency bands for street condition monitoring. This allows to include the frequency-dependence of the backscattering coefficients to be included in the street condition classification in order to obtain more accurate results. Thus, a method for determining the condition of a road by using a radar system as disclosed herein may not only use different polarizations but also at least two different frequencies which adds an additional dimension to the classification process. Therefore, the processing device may be configured to operate the SCM antennas at at least two different frequency bands.

The SCM antennas may comprise slotted substrate-integrated waveguide, SIW, arrays or slotted air waveguide, AWG, arrays. Slot antennas in substrate-integrated waveguide (SIW) or air waveguides (AWG) have higher polarization purity, i.e. a high isolation between co-polarized and cross-polarized radar waves, compared to patch arrays which are more lossy. As the determination of the co-polarized and cross-polarized backscattering coefficients is central to street condition monitoring, a high polarization purity of the SCM transmit and receive antennas is important for a reliable classification of the road condition.

The SCM antennas may comprise a one-way co-polarization to cross-polarization isolation of at least 22.4 dB, preferably at least 27.3 dB, more preferably at least 32.3 dB and most preferably at least 37.3 dB. One-way isolation in this context is understood as the isolation of a single transmit or receive antenna. A high co-polarization to cross-polarization isolation is important for reliably classifying the street condition because it relies on an accurate determination of the co-polarized and cross-polarized backscattering coefficients. Hence, the contribution of the antennas to these coefficients due to polarization impurities should be as low as possible.

The gain pattern of the SCM antennas may have a half power beam width of at most 45°, preferably at most 35°, more preferably at most 25° and most preferably at most 14.5°. The half power beam width is also known as the angle at which the antenna gain drops below 3 dB. The beamwidth is designed this way to illuminate only the street in front of the car and not to receive any energy from the sidewalks or other targets other than the street. For example, at the most preferred beamwidth of 14.5°, a height of the antenna of 0.5 m above ground and an elevation angle of -10°, the antenna would cover an area with a diameter of roughly 77 cm, wherein its midpoint would be at a distance of roughly 3 m to the antenna.

The main antennas may be configured to operate at a first center frequency and the SCM antennas may be configured to operate at the same frequency or a second center frequency different from the first center frequency. As mentioned, this allows the main and SCM antennas to be operated simultaneously and to isolate their signals by way of frequency. In case of simultaneous operation, the processing device may be configured to operate its inputs and/or output with different center frequencies. Alternatively, the processing device may comprise a first MMIC and a second MMIC operating at different frequencies.

The processing device may comprise at least one monolithic microwave integrated circuit, MMIC. In a preferred embodiment the processing device comprises two MMICs. MMICs allow to operate the antennas and perform functions such as mixing, amplification and modulation. They are rather small and can be produced at low costs. With the usage of frequency selective elements as described herein, a main antenna and an SCM antenna may share a single input or output, respectively, of an MMIC. This allows to reuse existing designs and to add the SCM antennas at reasonable costs and efforts.

The antennas may be communicatively coupled to the processing device via waveguides. The waveguides may be implemented as vias on a substrate. Thus, the antennas may be integrated with the processing device on the same substrate and the operative coupling between the antennas and the processing device, including e.g. a MMIC, may be done by via waveguides. This allows for a high integration, small form factor and low production costs.

The processing device may be configured to operate each of the antennas individually. As mentioned, this allows to separate the operation of the main antennas from the operation of the SCM antennas. Both antenna types are this well isolated and do not influence each other. The integration of the SCM antennas on existing designs may be done by replacing some of the main antennas.

The radar system may further comprise a plurality of main transmit antennas being configured to transmit main radar waves essentially parallel to a road on which the vehicle is standing or driving, and each being communicatively coupled to the processing device via a corresponding dedicated transmit output; and a plurality of main receive antennas being configured to receive reflections of the main radar waves off objects on the road, and each being communicatively coupled to the processing device via a corresponding dedicated receive input. The main antennas may thus be operated in a multiple input multiple output (MIMO) configuration allowing for a high spatial resolution, especially in an azimuthal direction.

The first polarization may be a vertical polarization and the second polarization may be a horizontal polarization. Linear polarized antennas can be realized with a rather simple design using, e.g. slot antennas in substrate-integrated waveguide (SIW) or air waveguides (AWG). In addition, street condition monitoring using linearly polarized radar waves leads to very accurate classification results as shown for example in European patent application No. 21197464.7 of the same applicant.

Alternatively, the first polarization may be a right-handed circular polarization, and the second polarization may be a left-handed circular polarization. In general, in addition to linear polarization, additional information can be detected with circular polarized signals that may be useful for street condition monitoring.

### 4. Brief Description of the Drawings

Possible embodiments of the present invention are described in more detail in the following detailed description with reference to the following figures.
- Fig. 1:: A schematic illustrating an embodiment of a radar system according to the present invention with main and SCM antennas;
- Fig. 2:: An exemplary configuration of an SCM antenna having horizontal polarization;
- Fig. 3:: An exemplary configuration of an SCM antenna having vertical polarization; and
- Fig. 4:: An example of using dual polarization and multiple frequency steps for street type and condition classification method using such antenna system concept.

### 5. Detailed Description of Possible Embodiments

For the sake of brevity, only a few embodiments will be described below. The person skilled in the art will recognize that the features described with reference to these specific embodiments may be modified and combined in different ways and that individual features may also be omitted, to the extent that it is supported by the claims. The general explanations in the sections above also apply to the more detailed explanations below.

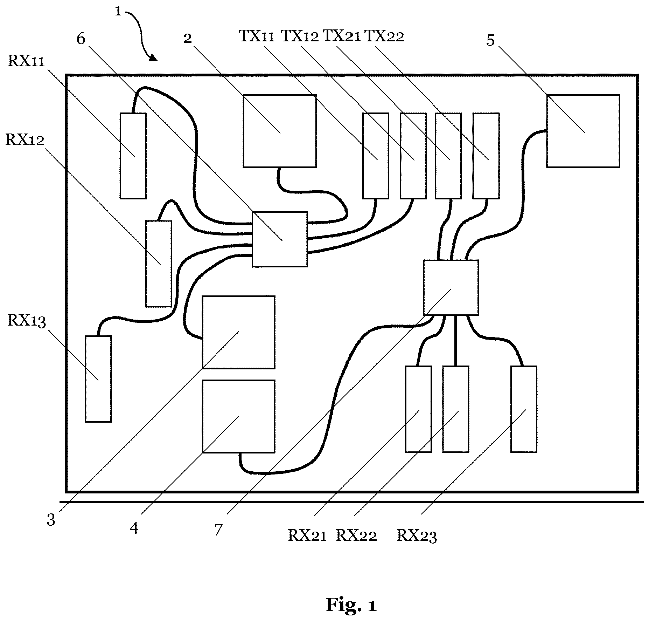

Fig. 1 illustrates an embodiment of a radar system according to the present invention. The radar system integrates main transmit antennas TX11, TX12, TX21, and TX22, main receive antennas RX11, RX12, RX13, RX21, RX22, and RX23, an SCM transmit antenna with horizontal polarization 2, an SCM transmit antenna with vertical polarization 5, an SCM receive antenna with horizontal polarization 4, and an SCM receive antenna with vertical polarization 3. The main antennas are configured for object detection and location and are realized as patch arrays in the example of Fig. 1. They could also be implemented as slot antennas. Thus, the main transmit antennas TX11, TX12, TX21, and TX22 are configured to transmit main radar waves essentially parallel to a road on which the vehicle, in which the sensor system is to be mounted, is standing or driving. The main receive antennas RX11, RX12, RX13, RX21, RX22, and RX23are configured to receive reflections of the main radar waves off objects on the road. As such, the main antennas form a 2x3 MIMO (multiple input multiple output) configuration. It should be noted that the invention is not limited to a particular number of main transmit and receive and antennas and different numbers and configurations may be used. Thus, a different MIMO configuration such as 4x4 may be used.

The radar system may generally be implemented on a printed circuit board (PCB) which acts as sandwiched structure including a substrate for the components of the radar system. Some components, such as waveguides, may be implemented directly in the substrate.

Each of the main transmit antennas TX11 and TX12 is operatively coupled to an output of a first MMIC 6 and each of the main transmit antennas TX21 and TX22 is operatively coupled to an output of a second MMIC 7. Likewise, each of the main receive antennas RX11, RX12, and RX13 is operatively coupled to an input of the first MMIC 6 and each of the main receive antennas RX21, RX22, and RX23 is operatively coupled to an input of the second MMIC 7. Thus, each of the main antennas is coupled to a corresponding MMIC by a dedicated channel which it does not share with another antenna. It should be noted that the number of main antennas and the number of MMICs is not limited to the number shown in the exemplary embodiment of Fig. 1.

The SCM transmit antenna with horizontal polarization 2 is operatively coupled to an output of the first MMIC 6 and the SCM receive antenna with vertical polarization 3 is operatively coupled to an input of the first MMIC 6. Likewise, the SCM receive antenna with horizontal polarization 4 is coupled to input of the second MMIC 7 and the SCM transmit antenna with vertical polarization 5 is operatively coupled to an output of the second MMIC 7. Therefore, also the SCM antennas are coupled to the MMICs via dedicated channels and do not share a channel with another antenna.

The antennas in the exemplary embodiment of Fig. 1 are operatively coupled to the MMICs 6 and 7 via waveguides. The waveguides may be implemented as substrate integrated waveguides (SIW) on a PCB.

The SCM antennas 2-5 in this exemplary embodiment have a horizontal and a vertical linear polarization and, thus, are polarimetric antennas. The invention is not limited to a particular type of polarization and the polarization is not necessarily orthogonal. For example, left-handed and right-handed polarized antennas may be used as well. The SCM transmit antennas 2 and 5 radiate radar waves with a corresponding polarization and the SCM receive antennas 3 and 4 receive radar waves with a corresponding polarization and suppress radar waves having a different polarization. Thus, the horizontally polarized SCM antennas 2 and 4 have a high gain at horizontal polarization but a small gain at vertical polarization. Correspondingly, the vertically polarized SCM antennas 3 and 5 have a high gain at vertical polarization but a small gain at horizontal polarization.

The SCM transmit antennas 2 and 5 are configured to transmit polarized radar waves essentially directed to the road at a corresponding polarization and the SCM receive antennas 3 and 4 are configured to receive, at a corresponding polarization, reflections (backscattered radar waves) of the polarized radar waves off the road. Although the waves incident on the road have essentially just a single polarization, the road and/or any covering (e.g. rain, ice, snow) may cause the reflected waves to contain a mixture of both polarizations. This effect is exploited and the corresponding classification process will be described briefly below.

The radar sensor in the exemplary embodiment of Fig. 1 also comprises two monolithic microwave integrated circuits MMICs 6 and 7. An MMIC allows to operate the antennas and performs functions such as mixing, amplification and modulation. The MMICs 6 and 7 operate both the main and the SCM antennas using certain modulation schemes. As mentioned, the invention is not limited to using two MMICs. It is also possible to use just a single MMIC or more than two.

The main antennas TX11, TX12, TX21, TX22, RX11, RX12, RX13, RX21, RX22, and RX23 and the SCM antennas 2-5 may operate at different center frequencies. In the example of Fig. 1, the main antennas operate at a center frequency of 76.5 GHz while the SCM antennas operate at a center frequency of 80.5 GHz. Other center frequencies may be used as well.

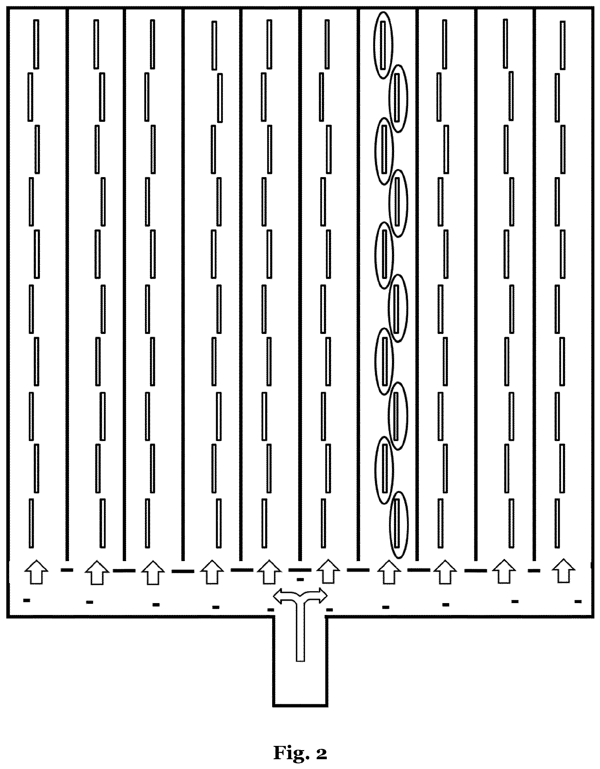

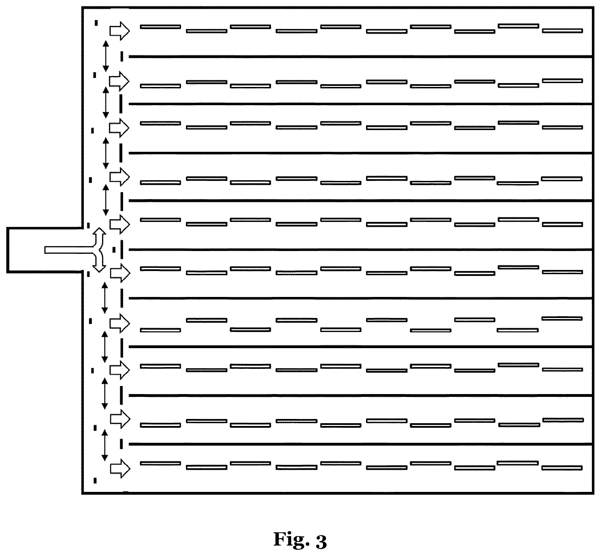

An exemplary design of the SCM antennas 2-5 to be used with the present invention, such as SCM antennas 2-5 is described in more detail with respect to Figures 2 and 3. These figures show SCM antennas designed as slot antennas in substrate-integrated waveguide (SIW) or
air waveguides (AWG). Such types of antennas have higher polarization purity (high co/cross pol isolation) compared to patch arrays which are more lossy. Thus, the antenna design shown in Figs. 2 and 3 allows for a 1-way co-pol/cross-pol isolation of 37 dB. Fig. 2 shows an SCM antenna for horizontal polarization while Fig. 3 shows an SCM antenna for vertical polarization. In the examples, the antennas are realized as an array of 10x10 slots having a maximum gain of 24.7 dB at an elevation angle of -10° (i.e. tilted down at the road when mounted in a vehicle). Other exemplary configurations include a 8x8 antenna array having a maximum gain of 22.8 dB at an elevation angle of -10°, a 6x6 antenna array having a maximum gain of 20.3 dB at an elevation angle of - 10°, and a 4x4 antenna array having a maximum gain of 16.7 dB at an elevation angle of -10°.

The slotted array for horizontal polarization shown in Fig. 2 is fed from the bottom, wherein each slot is placed such that it provides the necessary phase shift for the radiating beam to be tilted downwards in elevation. On the other hand, the slotted array for vertical polarization is fed from the side as shown in Fig. 3. In this case, the meander path lines are designed for the phase difference required to make the arrays (bottom to top) radiate with a beam tilted downwards in elevation.

It is generally observed that the higher the gain the narrower is the beamwidth of the SCM antennas. The main lobe of the SCM antennas is tilted such that it covers the range up to 10 m in front of the vehicle, into which the sensor system is mounted, with high signal-to-noise ratio (SNR). The elevation angle *θ* can be calculated using the following formula, assuming that h is the mounting height of the sensor and r is the desired range of the SCM antennas: *θ* = tan⁻¹(*h*/*r*). In an example, the radar sensor is mounted at a height of 0.5 m and has a range of 2.99 m at an elevation angle of -9.49°.

The 3 dB or half power beamwidth (HPBW) area coverage in azimuth with different elevation angles of an antenna with the diameter of 18 mm at 80.5 GHz can be calculated using the following equation: $HPBW = 70 \left(\frac{λ}{D}\right)$*,* wherein λ is the wavelength, D is the longest dimension of the antenna, and 70 is an antenna-dependent factor varying for different antenna types. Using basic trigonometry, it is observed that, for example at a range of 3 m and a beam tilted in elevation around -10° the 3 dB beamwidth in azimuth is 0.77 m corresponding to an HPBW of 14.5°. Advantageously, the beamwidth is designed to illuminate only the street in front of the car and not to receive any energy from the sidewalks or other targets than the street.

Next, the basic method of using the SCM antennas to classify different road conditions (street condition monitoring) is briefly explained. More details can be found in European patent application No. 21197464.7, publication number EP4152040A1, of the same applicant.

As mentioned, the SCM antennas illuminate an area of the street in front of the car by polarized radar waves and receive reflections, i.e. backscattered radar waves at different polarizations. Horizontal and vertical polarization is assumed herein, but other polarizations such as left-handed circular and right-handed circular may be used as well. The returns, i.e. the backscattering coefficients received by the SCM antennas are denoted as **HH** (radar wave sent at horizontal polarization, reflection received at horizontal polarization), VV (radar wave sent at vertical polarization, reflection received at vertical polarization), HV (radar wave sent at horizontal polarization, reflection received at vertical polarization) and VH (radar wave sent at vertical polarization, reflection received at horizontal polarization).

The HV return is affected the most by the roughness of the road, material of the road, and the weather conditions, while the VV return is the least affected. The difference between VV and HV is vast and is able to separate different road surfaces efficiently. The differential back-scattering coefficient (HH/VV) is unable to distinguish between road surfaces, but it follows a specific pattern; when plotting HH/VV to VV-HV, each road surface has a return in a different region and could be clustered separately. A single data point (single measurement point at one incidence angle) inside this cluster is sufficient to classify the road types with less computational power.

When the HV returns from the street is not available, a similar method could be used by taking the difference in VV and HH street returns for this particular case. Using this method, it is worth noting that, wet surfaces tend to have widely spread data points (high variance) while dry surfaces tend to have data points that cluster in a small region (low variance).

Thus, when the HV returns are available from the street, a single data point is sufficient to recognize and differentiate different road conditions which also leads to less processing and computation power. If the HV returns from the street is not available, the differential reflectivity with difference in co-pol for each incidence angle is considered to find the surface condition using their variance and finally using their VV returns the type of street is identified.

The SCM antennas in the exemplary embodiment have a bandwidth of 5 GHz. The bandwidth may be different in other embodiments. A high bandwidth of the SCM antennas allows using different frequencies or frequency bands for street condition monitoring. This allows to include the frequency-dependence of the backscattering coefficients to be included in the street condition classification in order to obtain more accurate results. Thus, a method for determining a condition of a road by using a radar system as disclosed herein may not only use different polarizations but also at least two different frequencies.

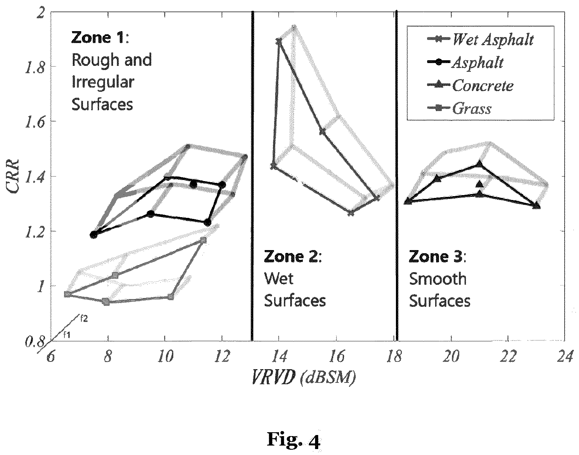

An example of using dual polarization and multiple frequency steps is shown in the diagram of Fig. 4 which shows CRR versus VRVD for two frequency steps f1 and f2. CRR is the differential back-scattering coefficient (HH/VV) mentioned above, whereas VRVD corresponds to the difference VV - HV mentioned above. As can be seen, the additional frequency adds another dimension for street classification and leads to more accurate results as the datapoints are concentrated in certain zones. Thus, zone 1 corresponds to rough and irregular surfaces, zone 2 corresponds to wet surfaces and zone 3 corresponds to smooth surfaces. By measuring the backscattering coefficients not only in dependence on polarization but also on frequency, the assignment of the current road condition to each of the zones becomes more reliable.

## Claims

1. Radar system (1) configured to be installed at a vehicle, the radar system comprising:
a processing device (6, 7) having a plurality of transmit outputs and a plurality of receive inputs;
at least one main transmit antenna (TX11, TX12, TX21, TX22) being configured to transmit main radar waves essentially parallel to a road on which the vehicle is standing or driving, and being communicatively coupled to the processing device via a first transmit output;
at least one main receive antenna (RX11, RX12, RX13, RX21, RX22, RX23) being configured to receive reflections of the main radar waves off objects on the road, and being communicatively coupled to the processing device via a first receive input;
a first street condition monitoring, SCM, transmit antenna (2) being configured to transmit first polarized radar waves essentially directed to the road at a first polarization, and being communicatively coupled to the processing device via a second transmit output;
a second SCM transmit antenna (5) being configured to transmit second polarized radar waves essentially directed to the road at a second polarization different from the first polarization, and being communicatively coupled to the processing device via a third transmit output; and
a first SCM receive antenna (4) being configured to receive, at the first polarization, reflections of the polarized radar waves off the road, and being communicatively coupled to the processing device via a second receive input; and
a second SCM receive antenna (3) being configured to receive, at the second polarization, reflections of the polarized radar waves off the road, and being communicatively coupled to the processing device via a third receive input, wherein the antennas are coupled to the processing device via dedicated channels.

2. Radar system (1) of claim 1, wherein the main lobes of the beam patterns of the SCM transmit (2, 5) and receive antennas (3, 4) are tilted relative to the main lobes of the beam patterns of the main transmit (TX11, TX12, TX21, TX22) and receive antennas (RX11, RX12, RX13, RX21, RX22, RX23).

3. Radar system (1) of one of claims 1 or 2, wherein the SCM antennas (2-5) are configured to cover an elevation angle of -75° to 0°, preferably of -40° to -5°, more preferably of -12° to -8° and most preferably of -10° when the radar system (1) is installed at a vehicle.

4. Radar system (1) of one of claims 1-3, wherein the SCM receive antennas (3, 4) have a higher dynamic range than the at least one main receive antenna (RX11, RX12, RX13, RX21, RX22, RX23).

5. Radar system (1) of one of claims 1-4, wherein the SCM antennas (2-5) have a bandwidth of at least 2 GHz, preferably at least 3 GHz, more preferably at least 4 GHz and most preferably at least 5 GHz.

6. Radar system (1) of one of claims 1-5, wherein the SCM antennas (2-5) comprise slotted substrate-integrated waveguide, SIW, arrays or slotted air waveguide, AWG, arrays.

7. Radar system (1) of one of claims 1-6, wherein the SCM antennas (2-5) comprise a one-way co-polarization to cross-polarization isolation of at least 22.4 dB, preferably at least 27.3 dB, more preferably at least 32.3 dB and most preferably at least 37.3 dB.

8. Radar system (1) of one of claims 1-7, wherein the gain pattern of the SCM antennas (2-5) has a half power beam width of at most 45°, preferably at most 35°, more preferably at most 25° and most preferably at most 14.5°.

9. Radar system (1) of one of claims 1-8, wherein the main antennas (TX11, TX12, TX21, TX22, RX11, RX12, RX13, RX21, RX22, RX23) are configured to operate at a first center frequency and the SCM antennas (2-5) are configured to operate at the same center frequency or a second center frequency different from the first center frequency.

10. Radar system (1) of one of claims 1-9, wherein the processing device (6, 7) comprises at least one monolithic microwave integrated circuit, MMIC (6, 7).

11. Radar system (1) of one of claims 1-10, wherein the antennas are communicatively coupled to the processing device (6, 7) via waveguides.

12. Radar system (1) of one of claims 1-11, wherein the processing device (6, 7) is configured to operate each of the antennas (2-5, TX11, TX12, TX21, TX22, RX11, RX12, RX13, RX21, RX22, RX23) individually.

13. Radar system (1) of one of claims 1-12, further comprising:
a plurality of main transmit antennas (TX11, TX12, TX21, TX22) being configured to transmit main radar waves essentially parallel to a road on which the vehicle is standing or driving, and each being communicatively coupled to the processing device via a corresponding dedicated transmit output; and
a plurality of main receive antennas (RX11, RX12, RX13, RX21, RX22, RX23) being configured to receive reflections of the main radar waves off objects on the road, and each being communicatively coupled to the processing device via a corresponding dedicated receive input.

14. Radar system (1) of one of claims 1-13, wherein the first polarization is a vertical polarization and the second polarization is a horizontal polarization.

15. Radar system (1) of one of claims 1-13, wherein the first polarization is a right-handed circular polarization, and the second polarization is a left-handed circular polarization.

## Patentansprüche

1. Radarsystem (1), das konfiguriert ist, um an einem Fahrzeug installiert zu werden, wobei das Radarsystem umfasst:
ein Verarbeitungsgerät (6, 7) mit einer Vielzahl von Sendeausgängen und einer Vielzahl von Empfangseingängen;
mindestens eine Hauptsendeantenne (TX11, TX12, TX21, TX22), die konfiguriert ist, um Hauptradarwellen im Wesentlichen parallel zu einer Straße zu senden, auf der das Fahrzeug steht oder fährt, und die über einen ersten Sendeausgang kommunikativ mit dem Verarbeitungsgerät gekoppelt ist;
mindestens eine Hauptempfangsantenne (RX11, RX12, RX13, RX21, RX22, RX23), die konfiguriert ist, um Reflexionen der Hauptradarwellen von Objekten auf der Straße zu empfangen, und die über einen ersten Empfangseingang kommunikativ mit dem Verarbeitungsgerät gekoppelt ist;
eine erste Straßenzustandsüberwachungs-, SCM-, Sendeantenne (2), die konfiguriert ist, um erste polarisierte Radarwellen zu senden, die im Wesentlichen mit einer ersten Polarisation auf die Straße gerichtet sind, und die über einen zweiten Sendeausgang kommunikativ mit dem Verarbeitungsgerät gekoppelt ist;
eine zweite SCM-Sendeantenne (5), die konfiguriert ist, um zweite polarisierte Radarwellen zu senden, die im Wesentlichen mit einer zweiten Polarisation, die sich von der ersten Polarisation unterscheidet, auf die Straße gerichtet sind, und die über einen dritten Sendeausgang kommunikativ mit dem Verarbeitungsgerät gekoppelt ist; und
eine erste SCM-Empfangsantenne (4), die konfiguriert ist, um mit der ersten Polarisation Reflexionen der polarisierten Radarwellen von der Straße zu empfangen, und die über einen zweiten Empfangseingang kommunikativ mit dem Verarbeitungsgerät gekoppelt ist; und
eine zweite SCM-Empfangsantenne (3), die konfiguriert ist, um mit der zweiten Polarisation Reflexionen der polarisierten Radarwellen von der Straße zu empfangen, und die über einen dritten Empfangseingang kommunikativ mit dem Verarbeitungsgerät gekoppelt ist, wobei die Antennen über dedizierte Kanäle mit dem Verarbeitungsgerät gekoppelt sind.

2. Radarsystem (1) nach Anspruch 1, wobei die Hauptkeulen der Strahlmuster der SCM-Sende- (2, 5) und Empfangsantennen (3, 4) relativ zu den Hauptkeulen der Strahlmuster der Hauptsende- (TX11, TX12, TX21, TX22) und Empfangsantennen (RX11, RX12, RX13, RX21, RX22, RX23) geneigt sind.

3. Radarsystem (1) nach einem der Ansprüche 1 oder 2, wobei die SCM-Antennen (2-5) konfiguriert sind, um einen Elevationswinkel von -75° bis 0°, vorzugsweise von -40° bis -5°, bevorzugter von -12° bis -8° und am meisten bevorzugt von -10° abzudecken, wenn das Radarsystem (1) an einem Fahrzeug installiert ist.

4. Radarsystem (1) nach einem der Ansprüche 1-3, wobei die SCM-Empfangsantennen (3, 4) einen höheren Dynamikbereich als die mindestens eine Hauptempfangsantenne (RX11, RX12, RX13, RX21, RX22, RX23) haben.

5. Radarsystem (1) nach einem der Ansprüche 1-4, wobei die SCM-Antennen (2-5) eine Bandbreite von mindestens 2 GHz, vorzugsweise mindestens 3 GHz, bevorzugter mindestens 4 GHz und am meisten bevorzugt mindestens 5 GHz haben.

6. Radarsystem (1) nach einem der Ansprüche 1-5, wobei die SCM-Antennen (2-5) geschlitzte substratintegrierte Wellenleiter-, SIW-, Arrays oder geschlitzte Luftwellenleiter-, AWG-, Arrays umfassen.

7. Radarsystem (1) nach einem der Ansprüche 1-6, wobei die SCM-Antennen (2-5) eine Einweg-Copolarisation-zu-Kreuzpolarisationsisolation von mindestens 22,4 dB, vorzugsweise mindestens 27,3 dB, bevorzugter mindestens 32,3 dB und am meisten bevorzugt mindestens 37,3 dB umfassen.

8. Radarsystem (1) nach einem der Ansprüche 1-7, wobei das Verstärkungsmuster der SCM-Antennen (2-5) eine Halbleistungsstrahlbreite von höchstens 45°, vorzugsweise höchstens 35°, bevorzugter höchstens 25° und am meisten bevorzugt höchstens 14,5° hat.

9. Radarsystem (1) nach einem der Ansprüche 1-8, wobei die Hauptantennen (TX11, TX12, TX21, TX22, RX11, RX12, RX13, RX21, RX22, RX23) konfiguriert sind, um mit einer ersten Zentrumsfrequenz zu arbeiten, und die SCM-Antennen (2-5) konfiguriert sind, um mit derselben Zentrumsfrequenz oder einer zweiten Zentrumsfrequenz, die sich von der ersten Zentrumsfrequenz unterscheidet, zu arbeiten.

10. Radarsystem (1) nach einem der Ansprüche 1-9, wobei das Verarbeitungsgerät (6, 7) mindestens eine monolithische integrierte Mikrowellenschaltung, MMIC (6, 7), umfasst.

11. Radarsystem (1) nach einem der Ansprüche 1-10, wobei die Antennen über Wellenleiter kommunikativ mit dem Verarbeitungsgerät (6, 7) gekoppelt sind.

12. Radarsystem (1) nach einem der Ansprüche 1-11, wobei das Verarbeitungsgerät (6, 7) konfiguriert ist, um jede der Antennen (2-5, TX11, TX12, TX21, TX22, RX11, RX12, RX13, RX21, RX22, RX23) einzeln zu betreiben.

13. Radarsystem (1) nach einem der Ansprüche 1-12, ferner umfassend:
eine Vielzahl von Hauptsendeantennen (TX11, TX12, TX21, TX22), die konfiguriert sind, um Hauptradarwellen im Wesentlichen parallel zu einer Straße zu senden, auf der das Fahrzeug steht oder fährt, und die jeweils über einen entsprechenden dedizierten Sendeausgang kommunikativ mit dem Verarbeitungsgerät gekoppelt sind; und
eine Vielzahl von Hauptempfangsantennen (RX11, RX12, RX13, RX21, RX22, RX23), die konfiguriert sind, um Reflexionen der Hauptradarwellen von Objekten auf der Straße zu empfangen, und die jeweils über einen entsprechenden dedizierten Empfangseingang kommunikativ mit dem Verarbeitungsgerät gekoppelt sind.

14. Radarsystem (1) nach einem der Ansprüche 1-13, wobei die erste Polarisation eine vertikale Polarisation und die zweite Polarisation eine horizontale Polarisation ist.

15. Radarsystem (1) nach einem der Ansprüche 1-13, wobei die erste Polarisation eine rechtshändige zirkulare Polarisation und die zweite Polarisation eine linkshändige zirkulare Polarisation ist.

## Revendications

1. Système radar (1) configuré pour être installé sur un véhicule, le système radar comprenant :
un dispositif de traitement (6, 7) avec une pluralité de sorties d'émission et une pluralité d'entrées de réception ;
au moins une antenne d'émission principale (TX11, TX12, TX21, TX22) qui est configurée pour émettre des ondes radar principales essentiellement parallèlement à une route sur laquelle le véhicule stationne ou est conduit, et qui est couplé de manière communicante au dispositif de traitement via une première sortie d'émission ;
au moins une antenne de réception principale (RX11, RX12, RX13, RX21, RX22, RX23) qui est configurée pour recevoir des réflexions des ondes radar principales provenant d'objets sur la route, et qui est couplée de manière communicante au dispositif de traitement via une première entrée de réception ;
une première antenne d'émission de surveillance de conditions de rue, SCM, (2) qui est configurée pour émettre des premières ondes radar polarisées essentiellement dirigées vers la route avec une première polarisation, et qui est couplée de manière communicante au dispositif de traitement via une seconde sortie d'émission ;
une seconde antenne d'émission SCM (5) qui est configurée pour émettre des secondes ondes radar polarisées essentiellement dirigées vers la route avec une seconde polarisation différente de la première polarisation, et qui est couplée de manière communicante au dispositif de traitement via une troisième sortie d'émission ; et
une première antenne de réception SCM (4) qui est configurée pour recevoir, avec la première polarisation, des réflexions des ondes radar polarisées provenant de la route, et qui est couplée de manière communicante au dispositif de traitement via une seconde entrée de réception ; et
une seconde antenne de réception SCM (3) qui est configurée pour recevoir, avec la seconde polarisation, des réflexions des ondes radar polarisées provenant de la route, et qui est couplée de manière communicante au dispositif de traitement via une troisième entrée de réception, les antennes étant couplées au dispositif de traitement via des canaux dédiés.

2. Système radar (1) de la revendication 1, dans lequel les lobes principaux des diagrammes de faisceau des antennes d'émission (2, 5) et de réception (3, 4) SCM sont inclinés par rapport aux lobes principaux des diagrammes de faisceau des antennes d'émission (TX11, TX12, TX21, TX22) et de réception (RX11, RX12, RX13, RX21, RX22, RX23) principales.

3. Système radar (1) de l'une des revendications 1 ou 2, dans lequel les antennes SCM (2-5) sont configurées pour couvrir un angle d'élévation de -75° à 0°, de préférence de -40° à -5°, plus préférablement de -12° à -8° et le plus préférablement de -10°, lorsque le système radar (1) est installé sur un véhicule.

4. Système radar (1) de l'une des revendications 1 à 3, dans lequel les antennes de réception SCM (3, 4) ont une plage dynamique supérieure à celle de l'au moins une antenne principale de réception (RX11, RX12, RX13, RX21, RX22, RX23).

5. Système radar (1) de l'une des revendications 1 à 4, dans lequel les antennes SCM (2-5) ont une largeur de bande d'au moins 2 GHz, de préférence d'au moins 3 GHz, plus préférentiellement d'au moins 4 GHz et le plus préférentiellement d'au moins 5 GHz.

6. Système radar (1) de l'une des revendications 1 à 5, dans lequel les antennes SCM (2-5) comprennent des réseaux de guide d'ondes à fentes intégrés à un substrat, SIW, ou des réseaux de guide d'ondes à fentes dans l'air, AWG,.

7. Système radar de l'une des revendications 1 à 6, dans lequel les antennes SCM (2-5) présentent un isolement entre copolarisation unidirectionnelle et polarisation croisée d'au moins 22,4 dB, de préférence d'au moins 27,3 dB, plus préférentiellement d'au moins 32,3 dB et le plus préférentiellement d'au moins 37,3 dB.

8. Système radar (1) de l'une des revendications 1 à 7, dans lequel le diagramme de gain des antennes SCM (2-5) présente une largeur du faisceau à demi-puissance d'au plus 45°, de préférence d'au plus 35°, plus préférentiellement d'au plus 25° et le plus préférentiellement d'au plus 14,5°.

9. Système radar (1) de l'une des revendications 1 à 8, dans lequel les antennes principales (TX11, TX12, TX21, TX22, RX11, RX12, RX13, RX21, RX22, RX23) sont configurées pour opérer à une première fréquence centrale et les antennes SCM (2-5) sont configurées pour opérer à la même fréquence centrale ou à une seconde fréquence centrale différente de la première fréquence centrale.

10. Système radar (1) de l'une des revendications 1 à 9, dans lequel le dispositif de traitement (6, 7) comprend au moins un circuit intégré micro-ondes monolithique, MMIC (6, 7).

11. Système radar de l'une des revendications 1 à 10, dans lequel les antennes sont couplées de manière communicante au dispositif de traitement (6, 7) via des guides d'ondes.

12. Système radar (1) de l'une des revendications 1 à 11, dans lequel le dispositif de traitement (6, 7) est configuré pour faire fonctionner individuellement chacune des antennes (2-5, TX11, TX12, TX21, TX22, RX11, RX12, RX13, RX21, RX22, RX23).

13. Système radar (1) de l'une des revendications 1 à 12, comprenant en outre :
une pluralité d'antennes d'émission principales (TX11, TX12, TX21, TX22) qui sont configurées pour émettre des ondes radar principales essentiellement parallèles à une route sur laquelle le véhicule stationne ou est conduit, et qui sont chacune couplées de manière communicante au dispositif de traitement via une sortie d'émission dédiée correspondante ; et
une pluralité d'antennes de réception principales (RX11, RX12, RX13, RX21, RX22, RX23) qui sont configurées pour recevoir des réflexions des ondes radar principales provenant d'objets sur la route, et qui sont chacune couplées de manière communicante au dispositif de traitement via une entrée de réception dédiée correspondante.

14. Système radar (1) de l'une des revendications 1 à 13, dans lequel la première polarisation est une polarisation verticale et la seconde polarisation est une polarisation horizontale.

15. Système radar (1) de l'une des revendications 1 à 13, dans lequel la première polarisation est une polarisation circulaire à droite, et la seconde polarisation est une polarisation circulaire à gauche.
